# EUROPEAN PATENT APPLICATION

(11) **EP 2 306 583 A1**
(43) Date of publication of application: **06.04.2011**
(21) Application number: 09773597.1
(22) Date of filing: 30.06.2009
(51) Int. Cl.: H01M 10/54

(54) **METHOD FOR RECOVERING OXIDE-CONTAINING BATTERY MATERIAL FROM WASTE BATTERY MATERIAL**

(30) Priority: 03.07.2008 JP 2008174341; 27.11.2008 JP 2008302286
(71) Applicant: Sumitomo Chemical Company, Limited, Tokyo 104-8260 (JP)
(72) Inventor: INUKAI, Hiroshi, Tsuchiura-shi Ibaraki 300-0037 (JP); ISOBE, Toshinori, Tsuchiura-shi, Ibaraki (JP); NAKANE, Kenji, Tsukuba-shi Ibaraki 305-0045 (JP)
(74) Representative: Hart-Davis, Jason
(86) International application number: PCT/JP2009/062248
(87) International publication number: WO 2010/002019

(57) **Abstract**

The present invention provides a method for recovering an oxide-containing battery material from a waste battery material. The recovery method includes steps (1) and (2) in this order: (1) a step of immersing a base taken out of the waste battery material and the base having an oxide-containing battery material, in a solvent that does not substantially dissolve the oxide, and stripping the battery material from the base thereby, and (2) a step of separating the battery material from the base.

## Description

### Technical Field

The present invention relates to a method for recovering an oxide-containing battery material from a base taken out of a waste battery material and having a battery material containing an oxide adhered thereto, particularly from an aluminum foil to which a battery material containing oxides containing valuable elements such as cobalt, manganese, nickel, iron, aluminum, and phosphorus is adhered.

### Background Art

In general, waste battery materials of secondary batteries contain oxides containing valuable elements such as cobalt, and nickel and, in terms of reservation of resources, attention is focused on a method for recovering oxides serving as positive electrode active materials.

Conventionally, as a method for recovering a battery material containing valuable elements from a base out of a waste battery material and having an oxide-containing battery material adhered thereto, when the base is an aluminum foil, there are known a method in which the aluminum foil having an oxide adhered thereto is calcined and then screened, and a method in which the aluminum foil is dissolved in an alkaline solution to separate and recover an oxide-containing battery material (for example, the specification in Japanese Patent No. 3676926 and Japanese Unexamined Patent Publication No.11-54159). In addition, there is known a method in which nitric acid is added to a recovered battery material, then a soluble portion is thereby dissolved to yield a mixture, an insoluble portion is removed from the mixture by filtration, and Co, Ni, and Mn are deposited as hydroxides to be taken out from a resultant element-containing solution, and the hydroxides are used as raw materials for positive electrode active materials.

As a method for recovering an oxide-containing battery material from a base taken out of a waste battery material and having an oxide-containing battery material adhered thereto, a simple and easy method that can be used advantageously from industrial point of view has been demanded.

### Disclosure of the Invention

An object of the present invention is to provide a simple and easy method for recovering a battery material from a base taken out of a waste battery material and having an oxide-containing battery material.

In order to solve the above-described problem, the present inventors have conduced various studies, and the present invention has been achieved as the result of the studies.

The present invention provides <1> to <10>.
<1> A method for recovering an oxide-containing battery material, the method comprising steps (1) and (2) in this order:
   (1) a step of immersing a base taken out of a waste battery material and the base having an oxide-containing battery material, in a solvent that does not substantially dissolve the oxide, and stripping the battery material from the base thereby, and
   (2) a step of separating the battery material from the base.
<2> The method according to <1>, wherein the oxide is a mixed oxide containing one or more members selected from an element group 1 and one or more members selected from a metal group 2:
   the element group 1 consisting of Ni, Co, Mn, Fe, Al, and P;
   the metal group 2 consisting of Li, Na, Ca, Sr, Ba, and Mg.
<3> The method according to <1>, wherein the base is selected from among an aluminum foil, a nickel foil, and a stainless steel foil.
<4> The method according to <1>, wherein the base is an aluminum foil.
<5> The method according to any one of <1> to <4>, wherein the solvent is one or more members selected from a solvent group:
   the solvent group consisting of N-methyl-2-pyrrolidone, water, dimethyl carbonate, diethyl carbonate, and chloroform.
<6> The method according to any one of <1> to <5>, wherein the solvent is an aqueous solution containing a compound of one or more members of the metal group 2 as described in <2>.
<7> The method according to <1>, wherein the battery material is adhered to the base.
<8> A method for producing an oxide comprising calcining a battery material obtained by the method according to any one of <1> to <7> at a temperature in a range of 600°C or more and 1100°C or less.
<9> The production method according to <8> further comprising adding a compound of one or more members of the metal group 2 as described in <2> to the recovered battery material, and then performing the calcination.
<10> The production method according to <6> or <7>, wherein the oxide is a positive electrode active material.
<11> A positive electrode comprising a positive electrode active material obtained by the production method according to <10>, wherein an amount of the positive electrode active material is 10% by weight or more relative to a total positive electrode active material.
<12> A battery comprising the positive electrode according to <11>.

### Brief Description of Drawings

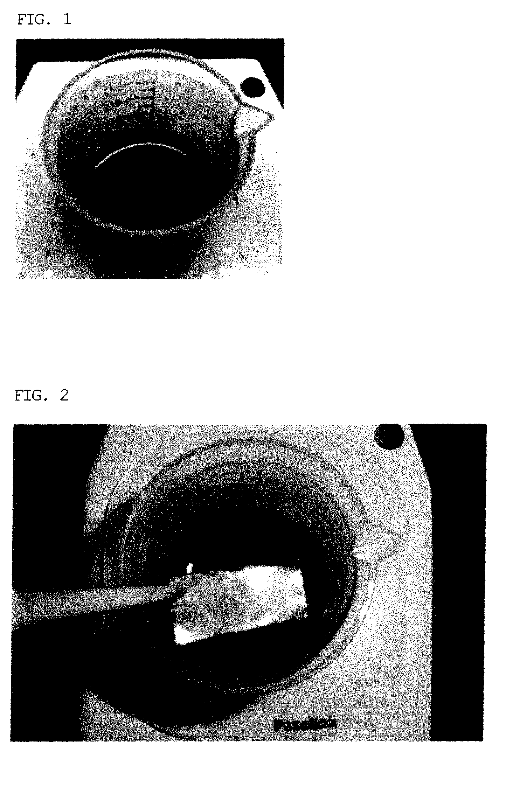

FIG. 1 is a photograph illustrating a state of a battery material suspension obtained by stirring a waste battery positive electrode material in NMP for 30 minutes in Example 1.
Fig. 2 is a photograph illustrating a state where an aluminum foil as a base is taken out of the obtained battery material suspension in Example 1.

### Mode for Carrying Out the Invention

### Method for recovering oxide-containing battery material

A method for recovering an oxide-containing battery material includes the following steps (1) and (2):
(1) a step of immersing a base taken out of a waste battery material and the base having an oxide-containing battery material, in a solvent that does not substantially dissolve the oxides, and stripping the battery material from the base thereby, and
(2) a step of separating the battery material from the base.

A battery positive electrode in which mixed oxides composed of Li and transition metals, such as lithium cobaltate, and lithium nickelate, are used as positive electrode active materials is used being applied on a base (for example, aluminum foil, nickel foil, and stainless steel foil). Therefore, in order to recover an oxide-containing battery material from a waste battery positive electrode material, it is necessary to strip the oxide-containing battery material from the base.

The method for recovering an oxide-containing battery material is suitably applied when a waste material contains, as an oxide contained in a battery material, a mixed oxide containing one or more members selected from an element group 1 and one or more members selected from a metal group 2, and is further suitably applied when a base having a mixed oxide adhered thereto is an aluminum foil:
the element group 1 consisting of Ni, Co, Mn, Fe, Al, and P;
the metal group 2 consisting of Li, Na, Ca, Sr, Ba, and Mg.

A battery material is stripped from an aluminum foil included in a waste battery material (waste battery positive electrode material) by immersion in a solvent that does not substantially dissolve an oxides contained in the battery material, whereby a liquid in which the stripped battery material is suspended can be obtained.

The solvent can be any solvent as long as it does not substantially dissolve oxides that are contained in the battery material and are to be recovered, such as organic solvents, e.g., N-methyl-2-pyrrolidone (NMP), and chloroform, and waster. The solvent can be single or a mixture of these solvents. When PVDF is added as a binder together with oxides, for example, it is preferable to use a solvent having high solvency with respect to the binder, or a mixed solvent containing the solvent, such as N-methyl-2-pyrrolidone (NMP) and a mixed solvent containing NMP.

Examples of the solvent include water, chloroform, toluene, xylene, amides such as N-methyl-2-pyrrolidone, and dimethylacetamide, carbonates such as dimethyl carbonate, and diethyl carbonate, alcohols such as methanol, and ethanol, ethers such as tetrahydrofuran, and diethyl ether, ketones such as acetone, and methyl isobutyl ketone, esters such as methyl acetate, nitriles such as acetonitrile, and butyronitrile, and one or more solvents selected from a solvent group described below are more preferable:
the solvent group consisting of N-methyl-2-pyrrolidone, water, dimethyl carbonate, diethyl carbonate, and chloroform.

These solvents are removed from a suspension by a method such as filtration. These solvents can be removed by evaporation or calcination even when small amounts thereof remain. Therefore, these solvents usually do not remain as impurities in a case where oxides are produced from recovered battery materials.

There are cases where an oxide of a recovered battery material contains Li, Na, Ca, Sr, Ba, or Mg. Even when Li, Na, Ca, Sr, Ba, or Mg remains, it does not become a contaminant of an oxide to be produced for a positive electrode active material so that the solvent can contain Li, Na, Ca, Sr, Ba, or Mg. For example, aqueous solutions of compound of one or more members in the metal group 2 can be suitably used as the solvent. Among aqueous solutions of compounds of these metals, an aqueous solution of a compound of Li and an aqueous solution of a compound of Na are more preferable.

The stripping of the battery material from the aluminum foil can be carried out by either of a method in which the aluminum foil having the battery material adhered thereto is immersed in the above-described solvent and a method in which the solvent having the aluminum foil immersed therein is stirred, and the stripping thereof is preferably carried out by the method in which the solvent is stirred.

The stripping is carried out usually at a temperature of not less than 10°C and less than the boiling point of the solvent. A preferable temperature varies according to the solvent, and is, e.g., 20°C to 90°C. The amount of the solvent to be used in the stripping can be any amount sufficient for the base to be immersed. The amount of the solvent is usually 1 time by weight or more relative to the base. Time required for the stripping varies according to temperatures and stirring conditions, and is, e.g., 10 minutes to 10 hours.

The recovery of the battery material from the solvent in which the battery material stripped from the aluminum foil is suspended can be carried out by a method in which members of the waste battery positive electrode material, such as the aluminum foil, other than the battery material are removed by methods such as gravity separation, filtration separation, centrifugal separation, and magnetic separation, and the battery material is then subjected to filtration. Examples of the method for recovering the battery material include typical filtration separation methods such as a pressure filter, central filter, and filter press.

Other methods for recovering the battery material include centrifugal separation and gravity separation. The battery material can be separated by removing members of the waste battery material, such as the aluminum foil, other than the battery material by methods such as filtration, centrifugal separation, and magnetic separation, and then filtering the battery material using a filter or leaving the battery material at rest two cause the suspended matter to settle. The battery material can also be separated by removing the members of the waste battery material, such as the aluminum foil, other than the battery material, and then performing drying or calcination to remove the solvent.

The solvent after separating the battery material from the suspension is recovered and reused as it is, or reused after being refined, for the stripping of the battery material from the waste material.

When the oxide recovered from the battery material is used for the positive electrode active material, the oxide is usually calcined. Preferable calcination conditions vary according to a positive electrode material contained in the battery material. When a calcination temperature is increased to a level higher than necessary, aggregation of the oxide is strengthened. On the other hand, the calcination temperature is preferably not less than a minimum temperature required for removing a binder or an electrical conductive material in the battery material. The calcination temperature is preferably 600°C or more and 1100°C or less, and more preferably 650°C or more and 1050°C or less. Usually, retention time at the calcination temperature is preferably in a range of 0.1 hour to 100 hours, and more preferably in a range of 1 hour to 6 hours. A temperature rising rate is usually 50°C to 400°C/hour, and a temperature dropping rate from the calcination temperature down to room temperature is usually 10°C to 400°C/hour. It is not necessary to perform the calcination at a constant temperature rising rate. For example, multistage calcination can be carried out in which the temperature is temporarily increased at a low temperature rising rate and maintained in order to effectively burn out an organic component such as a binder at a low temperature, and then the temperature rising rate is increased. A calcination atmosphere is preferably an atmosphere containing oxygen in terms of removal of a binder and electrical conductive material in the battery material. As a calcining furnace, a furnace capable of continuous operation is preferable in terms of industrialization, and examples thereof include a gas furnace, bogie hearth furnace, roller hearth kiln, rotary kiln, and pusher furnace.

Further, on an as needed basis, calcination can be carried out by adding compounds containing metals included in the metal group 2 to the battery material. When the metal is Li, examples of Li compounds to be added include lithium carbonate, lithium nitrate, lithium hydroxide, and mixtures thereof, and, when calcination is carried out at a low temperature, lithium hydroxide is preferable in terms of reactivity. Similarly, examples of transition metal compounds as raw materials to be added include carbonates, nitrates, hydroxides, and oxides of at least one or more transition metals, or mixtures thereof. As these compounds, commercially available products can be used without special pretreatment. Each of them preferably has high purity.

In order to accelerate the reaction during the calcination, an adequate amount of a reaction accelerator such as fluorides, chlorides, and borides can be added to the battery material. Two or more type of the reaction accelerators can be combined. In order to reduce the aggregation of a resultant oxide after the calcination, disintegration or pulverization can be carried out using a ball mill, jet mill and the like. Further, disintegration or pulverization, and calcination can be repeated twice or more. It is possible to wash or classify the resultant oxide on an as needed basis.

Furthermore, within a range where the effect of the present invention is not impaired, a part of Li, Na, Ca, Sr, Ba, Mg, transition metals (Ni, Mn, Co, Fe), Al, and P in oxides can be substituted by other elements. Herein, examples of the other elements include Ga, In, Si, Ge, Sn, Mg, Sc, Y, Zr, Hf, Nb, Ta, Cr, Mo, W, Tc, Ru, Rh, Ir, Pd, Cu, Ag, and Zn.

According to the above-described recovery methods, it is possible to directly recover oxides from a waste battery material, and recycle chargeable and rechargeable positive electrode materials by further calcining the oxides. Therefore, the above-described recovery methods are industrially suitable recycling methods. The positive electrode materials recovered by the methods can be applied to all of known positive electrode materials. Examples of the positive electrode materials include lithium cobaltate such as LiCoO₂, lithium nickelate such as LiNiO₂, lithium manganate such as LiMn₂O₄, lithium iron phosphate such as LiFePO₄, lithium manganese phosphate such as LiMnPO₄, lithium iron oxide such as LiFeO₂, sodium iron oxide such as NaFeO₂, solid solution compounds of one or more of these, and mixtures thereof.

### Positive electrode for nonaqueous electrolyte secondary battery

A description will be given of a positive electrode for a nonaqueous electrolyte secondary battery containing an oxide recovered by the above-described methods as a positive electrode active material.

The positive electrode can be produced by causing a positive electrode current collector to support thereon a positive electrode mixture containing a positive electrode active material composed of the oxide, an electrical conductive material, and a binder. In this case, the positive electrode for a nonaqueous electrolyte secondary battery has the electrical conductive material. As the electrical conductive material, carbonaceous materials can be used, and examples of the carbonaceous materials include a graphite powder, carbon black, acetylene black, and a filamentous carbonaceous material. Since carbon black and acetylene black have fine particles and have large surface areas, electrical conductivity in the positive electrode can be enhanced, and charge and discharge efficiency and a rate property can be improved by adding small amounts thereof to the positive electrode mixture. Usually, the proportion of the electrical conductive material in the positive electrode mixture is 5 parts by weight or more and 20 parts by weight or less relative to 100 parts by weight of a positive electrode active material powder. When the filamentous carbonaceous material is used as the electrical conductive material, the proportion thereof can be lowered.

At the binder, thermoplastic resins can be used, and specific examples thereof include fluorine resins such as polyvinylidene fluoride (hereinafter, referred to as PVDF in some cases), polytetrafluoroethylene, ethylene tetrafluoride propylene hexafluoride vinylidene fluoride copolymer, propylene hexafluoride vinylidene fluoride copolymer, and ethylene tetrafluoride perfluoro vinyl ether copolymer, polyolefin resins such as polyethylene, and polypropylene. Two or more of these compounds can also be used in admixture. Further, the positive electrode mixture superior in adhesion property with the positive electrode current collector can be obtained by using a fluorine resin and a polyolefin resin as the binder, and containing them such that the proportion of the fluorine resin relative to the positive electrode mixture is 1 to 10% by weight and the proportion of the polyolefin resin relative to the positive electrode mixture is 0.1 to 2% by weight.

As the positive electrode current collector, Al, Ni, stainless steel and the like can be used, and Al is preferable in terms of its easiness in being processed into a thin film and low cost. An example of a method for causing the positive electrode current collector to support thereon the positive electrode mixture includes a method of pressure molding or a method of pasting the positive electrode mixture using an organic solvent and the like, then applying the paste on the positive electrode current collector, and press-bonding the paste after drying. In the case of pasting, a slurry composed of the positive electrode active material, an electrical conductive material, a binder, and an organic solvent is prepared. Examples of the organic solvent include amine solvents such as N,N-dimethylaminopropylamine, and diethylenetriamine, ether solvents such as tetrahydrofuran, ketone solvents such as methyl ethyl ketone, ester solvents such as methyl acetate, amide solvents such as dimethylacetamide, and N-methyl-2-pyrrolidone.

Examples of a method of applying the positive electrode mixture on the positive electrode current collector include a slit die coating method, screen coating method, curtain coating method, knife coating method, gravure coating method, and electrostatic spray method. By the methods mentioned above, the positive electrode can be produced.

It is preferable that the positive electrode active material recovered and recycled by the above-described methods be used in the positive electrode in an amount of 10% by weight or more of the total positive electrode active material in terms of recovery and recycling of oxides for positive electrode active materials.

### Nonaqueous electrolyte secondary battery

A description will be given of a nonaqueous electrolyte secondary battery having a positive electrode by exemplifying a lithium secondary battery. The lithium secondary battery can be produced by accommodating an electrode group obtained by stacking and winding a separator, a negative electrode in which a negative electrode mixture is supported on a negative electrode current collector, and the above-described positive electrode in a vessel such as a battery can, and then impregnating an electrolytic solution composed of an organic solvent containing an electrolyte.

Examples of the shape of the electrode group include shapes that reveal circular, oblong, rectangular, and rounded-rectangular cross sections when the electrode group is cut in a direction perpendicular to the axis of winding thereof. Examples of the shape of the battery include a paper shape, coin shape, cylinder shape, and angular shape.

The negative electrode can be any electrode which can be doped and dedoped with lithium ions at potential lower than a positive electrode, and an example of the negative electrode include an electrode in which a negative electrode mixture containing a negative electrode material is supported on a negative electrode current collector, or an electrode composed solely of a negative electrode material. Examples of the negative electrode material include carbonaceous materials, chalcogen compounds (oxides, sulfides and the like), nitrides, metals or alloys, which can be doped and dedoped with lithium ions at potential lower than a positive electrode. These negative electrode materials may be used in admixture.

Specific examples of the carbonaceous materials include graphites such as natural graphite, and artificial graphite, cokes, carbon black, pyrolytic carbons, carbon fiber, and organic polymer compound calcined bodies.

The negative electrode mixture can contain a binder on an as needed basis. Examples of the binder include thermoplastic resins, and specific examples thereof include polyvinylidene fluoride, thermoplastic polyimide, carboxymethylcellulose, polyethylene, and polypropylene.

In a case where the electrolytic solution does not contain ethylene carbonate described later, when a negative electrode mixture containing polyethylene carbonate is used, the cycle property and the large current discharge property of the battery to be obtained are improved in some cases.

Examples of the negative electrode current collector included Cu, Ni, and stainless steel and, in terms of its difficulty in making an alloy with lithium and easiness in being processed into a thin film, Cu can be advantageously used. Examples of a method for causing the negative electrode current collector to support thereon the negative electrode mixture, similarly to the case of the positive electrode, include a of pressure molding, a method of pasting a negative electrode mixture using a solvent and the like, then applying the paste on a negative electrode current collector, and press-bonding the paste after drying.

As the separator, a member having a form such as a porous film, non-woven fabric, and woven fabric and made of a material of a polyolefin resin such as polyethylene, and polypropylene, a fluorine resin, or a nitrogen-containing aromatic polymer can be used. Two or more of the materials can be used to form the separator, or the members can be stacked each other.

The separator preferably has a porous film containing a thermoplastic resin. In the nonaqueous electrolyte secondary battery, usually, when an extraordinary current flows in the battery due to a short circuit between a positive electrode and a negative electrode, or the like, it is important to interrupt the current to block the flow of excessive current (perform shutdown). Consequently, when a usual use temperature is exceeded, the separator is required to perform the shutdown at a temperature as low as possible (in a case where the separator has a porous film containing a thermoplastic resin, obstruct micropores of the porous film) and then maintain, even when the temperature in the battery is increased to a certain high level after the shutdown, the shutdown condition without being ruptured to the temperature, in other words, the separator is required to have high heat resistance. As the separator, by using a separator composed of a porous laminate film in which a heat resistant porous layer containing a heat resistant resin and a porous film containing a thermoplastic resin are stacked each other, it becomes possible to further prevent a thermal film rupture temperature. The heat resistant porous layer can be stacked on both surfaces of the porous film.

In the electrolytic solution, examples of the electrolyte include lithium salts such as LiClO₄, LiPF₆, LiAsF₆, LiSbF₆, LIBF₄, LiCF₃SO₃, LiN (SO₂CF₃)₂, LiC (SO₂CF₃)₃, Li₂B₁₀Cl₁₀, lower aliphatic carboxylic acid lithium salts, and LiAlCl₄, and a mixture of two or more thereof can also be used. Among these, a lithium salt containing fluorine, which includes at least one member selected from the group consisting of LiPF₆, LiAsF₆, LiSbF₆, LiBF₄, LiCF₃SO₃, LiN (SO₂CF₃)₂ and LiC (SO₂CF₃)₃ is preferably used.

In the electrolytic solution, examples of the organic solvent, which can be used, include carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, any γ-butyrolactone; nitriles such as acetonitrile, and butyronitrile; amides such as N,N-dimethylformamide, and N,N-dimethylacetamide; carbamates such as 3-methyl-2-oxazolidone; and sulfur-containing compounds such as sulfolane, dimethyl sulfoxide, and 1,3-propane sultone; and two or more of these solvents are usually used in admixture. Of them, preferable are mixed solvents containing carbonates, and further preferable are mixed solvents of cyclic carbonates and non-cyclic carbonates or mixed solvents of cyclic carbonates and ethers.

Instead of the above-described electrolytic solution, a solid electrolyte can also be used. As the solid electrolyte, for example, polymer electrolytes, such as polyethylene oxide type polymer compounds, and polymer compounds containing at least one of polyorganosiloxane chain and polyoxyalkylene chain, can be used.

### Examples

Next, the present invention will be described in more detail on the basis of examples. The present invention is not limited thereto. It is to be noted that the evaluation of a recovered oxide (positive electrode active material) and the charge and discharge test were carried out in the following manner.

### 1. Charge and discharge test of oxide

An NMP solution of PVDF used as a binder was added to a mixture of a positive electrode material and an electrical conductive material (mixture of positive electrode material:acetylene black:graphite = 5 g:0.055 g:0.515 g) so as to attain a composition of active material:electrical conductive material:binder = 91:6:3 (ratio by weight), then the resultant mixture was kneaded to yield a paste, the paste was applied on a #200 stainless steel mesh used as a current collector, and vacuum drying was performed at 150°C for 8 hours to fabricate an electrode. The thus obtained electrode was combined with a solutions prepared by dissolving lithium perchlorate in a concentration of 1 mol/liter into a mixed solution of propylene carbonate (hereinafter, referred to as PC in some cases) and 1,2-dimethoxyethane (hereinafter, referred to as DMC in some cases) at a ratio of 1:1 as an electrolytic solution, a polypropylene porous film as a separator, and metal lithium as a counter electrode (negative electrode), whereby a flat battery was fabricated.

### 2. Powder X-ray diffractometry of oxide

Powder X-ray diffractometry of an oxide was carried out using RINT 2500 TTR-type manufactured by Rigaku Corporation. A lithium mixed oxide was filled on a dedicated substrate, and the measurement was carried out in the range of diffraction angle 2θ = 10° to 90° using a CuKα radiation source to obtain a powder X-ray diffraction pattern.

### Example 1

(1) A waste battery positive electrode material in which lithium cobaltate as a positive electrode active material was adhered to both surface of an aluminum foil together with PVDF as a binder and carbon as an electrical conductive material was cut into a narrow paper-like specimen of 1 cm × 2 cm, and then the specimen was put in a resin beaker together with a stirring needle. As a solvent, 20 ml of NMP was added thereto, and the resultant mixture was stirred for 30 minutes at room temperature (25°C) using a stirrer. After 30 minutes, the beaker was observed from above to find that a suspension as illustrated in a photograph 1 was obtained. The aluminum foil was taken out of the suspension. The aluminum foil from which the oxide had been stripped was able to be recovered as illustrated in a photograph 2.
(2) An equivalent of a battery material (lithium cobaltate) was calcined in air under conditions of 700°C × 4 hours (heating/cooling rate = 300 K/hour). When the oxide after the calcination was measured by X-ray diffraction (XRD), no peak other than that of lithium cobaltate was detected. The obtained oxide was processed into the above-described electrode to fabricate a flat battery, and then a charge and discharge test was performed at a maximum charging voltage of 4.3 V, a minimum discharging voltage of 3.0 V, and a constant current of 0.17 mA/cm² to find that charge discharge were performed. Consequently, the oxide is suitably used as a positive electrode material.
(3) The battery material, (lithium cobaltate) obtained by the method of (1) in Example 1 was calcined in air under conditions of 700°C × 4 hours (heating/cooling rate = 300 K/hour). When the oxide after the calcination was measured by X-ray diffraction (XRD), no peak other than that of lithium cobaltate was detected. After the obtained oxide was processed into the above-described electrode to fabricate the flat battery, it was possible to perform a charge and discharge test at a maximum charging voltage of 4.3 V, a minimum discharging voltage of 3.0 V, and a constant current of 0.17 mA/cm². The initial discharge capacity was 155 mAh/g.

### Example 2

(1) A waste battery positive electrode material in which lithium nickel manganese oxide as a positive electrode active material was adhered to one surface of an aluminum foil together with PVDF as a binder and carbon as an electrical conductive material was cut into a narrow paper-like specimen of 3 cm × 5 cm, and then the specimen was put in a glass beaker. As a solvent, 150 ml of NMP was added thereto, and the resultant mixture was stirred using a resin rod for 20 minutes at room temperature (25°C). After 20 minutes, the beaker was observed from above to find that a suspension similar to that in the photograph 1 was obtained. The aluminum foil was taken out of the suspension. The aluminum foil from which the oxide had been stripped was able to be recovered, similarly to the photograph 2. Consequently, the present recovery method is suitable.
(2) An equivalent of a battery material (mixture of lithium nickel manganese oxide:aceytlene black:graphite = 5 g:0.055 g:0.515 g) was calcined in air under conditions of 700°C × 4 hours (heating/cooling rate = 300 K/hour). When the oxide after the calcination was measured by XRD, no peak other than that of lithium nickel manganese oxide was detected. The obtained oxide was measured by the same method as in Example 1 to find that charge and discharge were able to be performed. The initial discharge capacity was 145 mAh/g.
(3) A battery material (lithium nickel ferromanganese oxide) obtained by the method of (1) in Example 2 was calcined in air under conditions of 700°C × 4 hours (heating/cooling rate = 300 K/hour). When the oxide after the calcination was measured by X-ray diffraction (XRD), no peak other than that of lithium nickel ferromanganese oxide was detected. After the obtained oxide was processed into the above-described electrode to fabricate a flat battery, it was possible to perform a charge and discharge test at a maximum charging voltage of 4.3 V, a minimum discharging voltage of 3.0 V, and a constant current of 0.13 mA/cm². The initial discharge capacity was 100 mAh/g.

### Example 3

To 10 g of a battery material (lithium nickel manganese oxide) obtained by the same method as in (1) of Example 2, 0.1 g of lithium hydroxide monohydrate (manufactured by wake Pure Chemical Industries, Ltd., special grade reagent) is added, and the resultant mixture is mixed using an agate mortar to yield a mixed powder. The mixed powder is calcined in an air atmosphere under conditions of 1040°C × 4 hours (heating/cooling rate = 300 K/hour). When the obtained oxide is measured by the same method as in Example 1, it is found that charge and discharge are performed. Consequently, the oxide is suitably used as a positive electrode material.

### Example 4

When a mixed positive electrode active material obtained by mixing 1 g of an oxide and 10 g of lithium nickel manganese oxide obtained by the same recovery method as in Example 2 using an agate mortar is measured by the same method as in Example 1, it is found that charge and discharge are performed. Consequently, the oxide is suitably used as a positive electrode material.

## Claims

1. A method for recovering an oxide-containing battery material, the method comprising steps (1) and (2) in this order:
(1) a step of immersing a base taken out of a waste battery material and the base having an oxide-containing battery material, in a solvent that does not substantially dissolve the oxide, and stripping the battery material from the base thereby, and
(2) a step of separating the battery material from the base.

2. The recovery method according to Claim 1, wherein the oxide is a mixed oxide containing one or more members selected from an element group 1 and one or more members selected from a metal group 2:
the element group 1 consisting of Ni, Co, Mn, Fe, Al, and P;
the metal group 2 consisting of Li, Na, Ca, Sr, Ba, and Mg.

3. The recovery method according to Claim 2, wherein the base is selected from among an aluminum foil, a nickel foil, and a stainless steel foil.

4. The recovery method according to Claim 2, wherein the base is an aluminum foil.

5. The recovery method according to any one of Claims 1 to 4, wherein the solvent is one or more members selected from a solvent group:
the solvent group consisting of N-methyl-2-pyrrolidone, water, dimethyl carbonate, diethyl carbonate, and chloroform.

6. The recovery method according to any one of Claims 1 to 4, wherein the solvent is an aqueous solution containing a compound of one or more members of the metal group 2 as described in Claim 2.

7. The recovery method according to Claim 1, wherein the battery material is adhered to the base.

8. A method for producing an oxide comprising:
calcining a battery material obtained by the method according to any one of Claims 1 to 7 at a temperature in a range of 600°C or more and 1100°C or less.

9. The production method according to Claim 8 further comprising:
adding a compound of one or more members of the metal group 2 as described in Claim 2 to the recovered battery material, and then performing the calcination.

10. The production method according to Claim 8 or 9, wherein the oxide is a positive electrode active material.

11. A positive electrode comprising a positive electrode active material obtained by the production method according to Claim 10, wherein an amount of the positive electrode active material is 10% by weight or more relative to a total positive electrode active material.

12. A battery comprising the positive electrode according to Claim 11.
